# EUROPÄISCHE PATENTSCHRIFT

(11) **EP 2 249 072 B1**
(45) Veröffentlichungstag und Bekanntmachung des Hinweises auf die Patenterteilung: **07.08.2013**
(21) Anmeldenummer: 10450025.1
(22) Anmeldetag: 22.02.2010
(51) Int. Cl.: F16L 33/207, F16L 33/22, F16L 13/14

(54) **Anschlussvorrichtung für ein Kunstoffrohr an einem Anschlussnippel**
Device for connecting a plastic tube to a connection nipple
Dispositif de raccordement d'un tuyau en plastique sur un embout

(30) Priorität: 28.04.2009 AT 6472009
(43) Veröffentlichungstag der Anmeldung: 10.11.2010
(73) Patentinhaber: KE-KELIT Kunststoffwerk Gesellschaft m.b.H., 4020 Linz (AT)
(72) Erfinder: Ratschmann, Elmar, 4020 Linz (AT)
(74) Vertreter: Hübscher, Helmut

(56) Entgegenhaltungen:
- EP-A1- 0 940 620
- EP-A1- 1 559 943
- EP-A1- 2 112 416
- EP-A2- 1 813 850

## Beschreibung

Die Erfindung bezieht sich auf eine Anschlussvorrichtung für ein Kunststoffrohr, mit einem Anschlussnippel und einer Klemmhülse, wobei das Anschlussende des Kunststoffrohrs zwischen dem Anschlussnippel und der Klemmhülse axial festgehalten ist, wobei die Klemmhülse im Bereich der Stirnseite des auf den Anschlussnippel aufgeschobenen Anschlussendes des Kunststoffrohrs wenigstens eine Öffnung bildet, durch die ein radial einwärts vorstehender, über die Stirnseite des Anschlussendes des Kunststoffrohrs radial nach außen verlagerbarer Anschlag ragt.

Um mit einem Druckmedium beaufschlagbare Kunststoffrohre, beispielsweise für Wasserleitungen von Hausinstallationen, an eine Armatur anzuschließen, ist es bekannt, das Anschlussende der Kunststoffrohre auf einen mit einer Profilierung versehenen Anschlussnippel der Armatur aufzuschieben und zwischen dem Anschlussnippel und einer Klemmhülse festzuklemmen, wobei die Abdichtung durch wenigstens einen in eine Umfangsnut des Anschlussnippels eingesetzten Dichtungsring sichergestellt wird. Die Klemmung des Kunststoffrohrs und damit der Abzugswiderstand hängen dabei von der Eingriffslänge des Anschlussendes des Kunststoffrohrs im Ringspalt zwischen Anschlussnippel und Klemmhülse ab, sodass es für eine ordnungsgemäße Klemmung des Kunststoffrohrs erforderlich ist, dessen Anschlussende ausreichend weit auf den Anschlussnippel aufzuschieben. Zur Kontrolle der Aufschublänge ist es bekannt, im Bereich der Stirnseite des auf den Anschlussnippel aufgeschobenen Anschlussendes des Kunststoffrohrs in der Klemmhülse eine Sichtöffnung vorzusehen, sodass durch die Sichtöffnung erkannt werden kann, ob das Anschlussende des Kunststoffrohrs ausreichend weit in die Klemmhülse eingreift. Nachteilig ist allerdings, dass aufgrund häufig schwer zugänglicher Armaturen im Nachhinein der Sitz des Anschlussendes des Kunststoffrohrs in der Klemmhülse nicht mehr überprüft werden kann.

Zur Vermeidung dieses Nachteils wurde bereits vorgeschlagen (EP 0 940 620 A1, EP 1 559 943 A1), die Klemmhülse mit einem Einsatz zu versehen, der wenigstens einen radial einwärts vorstehenden, mit der Stirnseite des Anschlussendes des Kunststoffrohrs zusammenwirkenden Anschlag aufweist, sodass beim Einschieben des Kunststoffrohrs zwischen dem Anschlussnippel und der Klemmhülse der Anschlag über das eingeschobene Kunststoffrohr radial nach außen durch eine entsprechende Öffnung der Klemmhülse verlagert wird und dann eine sichtbare Anzeige für das ordnungsgemäße Aufschieben des Kunststoffrohrs auf den Anschlussnippel darstellt. Nachteilig bei dieser bekannt Konstruktion ist allerdings, dass ein zusätzlicher Einsatz erforderlich wird und dass nach einem Abziehen des Kunststoffrohrs vom Anschlussnippel nicht mehr festgestellt werden kann, ob das Kunststoffrohr ordnungsgemäß auf dem Anschlussnippel aufgeschoben worden war.

Der Erfindung liegt somit die Aufgabe zugrunde, eine Anschlussvorrichtung der eingangs geschilderten Art für ein Kunststoffrohr an einem Anschlussnippel so auszugestalten, dass unter Einsatz vergleichsweise einfacher Konstruktionsmittel auch im Nachhinein überprüft werden kann, ob das Anschlussende des Kunststoffrohrs ursprünglich ordnungsgemäß in die Klemmhülse eingeführt worden ist.

Die Erfindung löst die gestellte Aufgabe dadurch, dass der Anschlag einteilig mit der Klemmhülse ausgebildet ist und über eine zu seiner Verlagerung zu lösende Sollbruchstelle innerhalb der Öffnung in einer Anschlaglage gehalten ist.

Da zufolge dieser Maßnahmen der Anschlag einteilig mit der Klemmhülse ausgebildet ist, ergeben sich zunächst einfache Konstruktionsverhältnisse, weil sich gesonderte Einsätze für die Kunststoffhülse erübrigen. Wegen der Halterung des Anschlags in einer Anschlaglage über eine Sollbruchstelle ist eine Verlagerung des Anschlags durch die Öffnung der Klemmhülse radial nach außen nur nach einem Lösen dieser Sollbruchstelle möglich. Durch eine solche Sollbruchstelle kann somit im Schadensfall, also bei einem Abziehen des Kunststoffrohrs vom Anschlussnippel beispielsweise aufgrund eines entsprechenden Drucks des im Kunststoffrohr geführten Mediums, auch im Nachhinein festgestellt werden, ob beim Herstellen der Klemmverbindung des Kunststoffrohrs zwischen dem Anschlussnippel und der Klemmhülse das Anschlussende des Kunststoffrohrs ordnungsgemäß tief auf den Anschlussnippel aufgeschoben worden ist oder nicht.

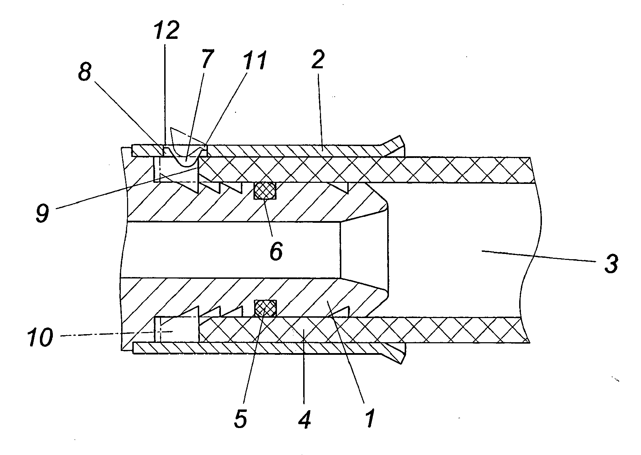

In der Zeichnung ist der Erfindungsgegenstand beispielsweise dargestellt, und zwar wird eine erfindungsgemäße Anschlussvorrichtung für ein Kunststoffrohr an einem Anschlussnippel in einem vereinfachten Längsschnitt gezeigt.

Die Anschlussvorrichtung gemäß dem dargestellten Ausführungsbeispiel weist einen Anschlussnippel 1 einer nicht näher dargestellten Armatur sowie eine mit dem Anschlussnippel 1 verbundene Klemmhülse 2 auf, zwischen der und dem profilierten Anschlussnippel 1 ein Kunststoffrohr 3 festgeklemmt wird, dessen Anschlussende 4 in den Ringspalt zwischen Anschlussnippel 1 und Klemmhülse 2 vor dem Klemmen eingeführt wird. Die eigentliche Klemmverbindung wird dann beispielsweise über in die Klemmhülse 2 eingeprägte Sicken vorgenommen. Die Dichtung zwischen dem Anschlussnippel 1 und dem Kunststoffrohr 3 wird durch einen Dichtungsring 5 erreicht, der in eine Umfangsnut 6 des Anschlussnippels 1 eingesetzt ist.

Da die Klemmverbindung von der Eingriffslänge des Anschlussendes 4 des Kunststoffrohrs 3 in den Ringspalt zwischen Anschlussnippel 1 und Klemmhülse 2 abhängt, ist das Anschlussende 4 entsprechend weit auf den profilierten Anschlussnippel 1 aufzuschieben. Damit die Eingriffslage des Anschlussendes 4 des Kunststoffrohrs 3 überwacht werden kann, ist die Klemmhülse 2 mit wenigstens einem radial einwärts vorstehenden Anschlag 7 versehen, der in einer Öffnung 8 der Kunststoffhülse 2 gelagert ist und durch die Öffnung 8 über die Stirnseite 9 des Anschlussendes 4 des Kunststoffrohrs 3 nach außen verlagert werden kann, wenn das Anschlussende 4 bis zur strichpunktiert angedeuteten Anschlussstellung 10 in die Klemmhülse 2 eingeschoben wird. Gemäß dem dargestellten Ausführungsbeispiel ist der Anschlag 7 über ein Filmscharnier 11 mit dem Rand der Öffnung 8 in der Klemmhülse 2 verbunden und durch eine Sollbruchstelle 12 in der in vollen Linien dargestellten Anschlagstellung gehalten. Stößt beim Einschieben des Anschlussendes 4 des Kunststoffrohrs 3 in die Klemmhülse 2 die Stirnseite 9 an den Anschlag 7 an, so wird über die Stirnseite 9 des Kunststoffrohrs 3 auf den Anschlag 7 ein Drehmoment ausgeübt, das bei einer entsprechenden axialen Belastung des Kunststoffrohrs 3 die Sollbruchstelle 12 löst, sodass der Anschlag 7 durch die Öffnung 8 nach außen gebogen werden kann, wie dies strichpunktiert angedeutet ist. Das Anschlussende 4 der Kunststoffhülse 2 kann somit unbehindert in die Anschlussstellung 10 vorgeschoben werden, bevor das Kunststoffrohr 3 zwischen dem Anschlussnippel 1 und der Kunststoffhülse 2 festgeklemmt wird. Der radial über die Klemmhülse 2 vorstehende Anschlag 7 zeigt dann an, dass das Anschlussende 4 des Kunststoffrohrs 3 ordnungsgemäß in die Anschlussstellung 10 vorgeschoben wurde, wobei auch nach einem fehlerhaften Ausziehen des Kunststoffrohrs 3 aus der Klemmhülse 2 festgestellt werden kann, ob ursprünglich die Anschlussstellung 10 erreicht worden ist.

## Patentansprüche

1. Anschlussvorrichtung für ein Kunststoffrohr (3), mit einem Anschlussnippel (1) und einer Klemmhülse (2), wobei das Anschlussende (4) des Kunststoffrohrs (3) zwischen dem Anschlussnippel (1) und der Klemmhülse (2) axial festgehalten ist, wobei die Klemmhülse im Bereich der Stirnseite (9) des auf den Anschlussnippel (1) aufgeschobenen Anschlussendes (4) des Kunststoffrohrs (3) wenigstens eine Öffnung (8) bildet, durch die ein radial einwärts vorstehender, über die Stirnseite (9) des Anschlussendes (4) des Kunststoffrohrs (3) radial nach außen verlagerbarer Anschlag (7) ragt, **dadurch gekennzeichnet, dass** der Anschlag (7) einteilig mit der Klemmhülse (2) ausgebildet ist und über eine zu seiner Verlagerung zu lösende Sollbruchstelle (12) innerhalb der Öffnung (8) in einer Anschlaglage gehalten ist.

## Claims

1. Connection device for a synthetic material tube (3), having a connection nipple (1) and a clamping sleeve (2), wherein the connection end (4) of the synthetic material tube (3) is fixedly held in the axial direction between the connection nipple (1) and the clamping sleeve (2), wherein in the region of the end face (9) of the connection end (4) of the synthetic material tube (3) which is pushed onto the connection nipple (1), the clamping sleeve forms at least one opening (8) through which protrudes a radially inwardly protruding stop (7) which can be displaced radially outwards by the end face (9) of the connection end (4) of the synthetic material tube (3), **characterised in that** the stop (7) is formed as one piece with the clamping sleeve (2) and is held in a stop position via a desired breaking point (12) - which is to be broken for it to be displaced - within the opening (8).

## Revendications

1. Dispositif de raccordement pour un tuyau en plastique (3), avec un embout (1) et une douille de serrage (2), l'extrémité du raccordement (4) du tuyau en plastique (3) étant maintenue axialement entre l'embout (1) et la douille de serrage (2), la douille de serrage formant dans la zone du côté frontal (9) de l'extrémité du raccordement (4), emmanchée sur l'embout (1), du tuyau en plastique (3), au moins une ouverture (8), à travers laquelle se dresse une butée (7) pouvant être décalée radialement vers l'extérieur sur le côté frontal (9) de l'extrémité du raccordement (4) du tuyau en plastique (3) et sortant radialement vers l'intérieur, **caractérisé en ce que** la butée (7) est conçue en un morceau avec la douille de serrage (2) et est maintenue, à l'intérieur de l'ouverture (8), dans une position de butée sur un point de rupture (12) à débloquer pour son déplacement.
